# EUROPEAN PATENT SPECIFICATION

(11) **EP 2 124 519 B1**
(45) Date of publication and mention of the grant of the patent: **12.08.2015**
(21) Application number: 08717237.5
(22) Date of filing: 28.02.2008
(51) Int. Cl.: A01G 1/00

(54) **METHOD AND COMPOSITION FOR ENRICHING POTATOES WITH IODINE AND POTATOES OBTAINED THEREBY.**
VERFAHREN UND ZUSAMMENSETZUNG ZUR ANREICHERUNG VON KARTOFFELN MIT IODINEN UND DADURCH GEWONNENE KARTOFFELN
PROCÉDÉ ET COMPOSITION PERMETTANT D'ENRICHIR DES POMMES DE TERRE EN IODE ET POMMES DE TERRE OBTENUES SELON CE PROCÉDÉ

(30) Priority: 01.03.2007 IT BO20070138
(43) Date of publication of application: 02.12.2009
(73) Proprietor: Pizzoli S.P.A., 40054 Budrio (IT)
(72) Inventor: ZANIRATO, VALERIA, I-45100 Rovigo (IT)
(74) Representative: Zanoli, Enrico
(86) International application number: PCT/EP2008/052455
(87) International publication number: WO 2008/104600

(56) References cited:
- EP-A- 1 153 901
- DATABASE WPI Week 200828 Derwent Publications Ltd., London, GB; AN 2008-D86773 XP002483638 "Planting iodine-containing sweet potato useful as natural source for replenishing iodine to human by putting specified amount of solid iodine organic fertilizer once into center of border check planted with sweet potato seedling" & CN 101 080 986 A (UNIV ZHEJIANG) 5 December 2007 (2007-12-05)
- DATABASE EMBASE [Online] ELSEVIER SCIENCE PUBLISHERS, AMSTERDAM, NL; 1964, ZHURBIN A T: "Addition of iodine to vegetables (russian)" XP002483637 Database accession no. EMB-0008272861 & VOPROSY PITANIIA 1964, vol. 2, 1964, pages 86-87, ISSN: 0042-8833
- HALDIMANN M ET AL: "Iodine content of food groups" JOURNAL OF FOOD COMPOSITION AND ANALYSIS, ACADEMIC PRESS, LONDON, GB, vol. 18, no. 6, 1 September 2005 (2005-09-01), pages 461-471, XP004757200 ISSN: 0889-1575
- WINGER ET AL: "Technological issues associated with iodine fortification of foods" TRENDS IN FOOD SCIENCE AND TECHNOLOGY, ELSEVIER SCIENCE PUBLISHERS, GB, vol. 19, no. 2, 10 January 2008 (2008-01-10), pages 94-101, XP022415461 ISSN: 0924-2244

## Description

### TECHNICAL FIELD

The present invention concerns the agroindustrial sector and it refers to a process and a composition to enrich potatoes with iodine and potatoes obtained thereby.

### BACKGROUND ART

It is known that iodine is a nutritional element very important for animal and human health, because it is an essential component of thyroid hormones in human body, like thyroxine (T4) and triiodothyronine (T3), that play a key role in the central nervous system development and also in body growth.

In normal condition renal excretion is proportional to ingestion (Dunn et al, 1993; Dunn, 1996), so urinary excretion of iodine is a precise indicator of iodine intake and it is the standard method in the world to estimate iodine status (WHO, UNICEF & ICCIDD, 1994).

Iodine in foods is prevalently in form of inorganic iodide, that it is quickly and completely taken up in stomach and in superior part of small intestine. Iodine present in food as iodate form is quickly reduced in intestine and the resulting iodide form is immediately absorbed.

With a few exception of uncommon case of hyper-sensibility for iodide, human being well tolerates big amount of iodine (Stanbury et al, 1998; Dunn et al, 1998; Institute of Medicine, 2001), thanks to the efficient thyroid control system. Chronic toxicity appears only when iodide intake is 20 times higher than daily requirement, that is 2 mg/die.

Maximum level of tolerance for iodine introduction has been fixed by Institute of Medicine of United States Sciences Academy at 1100 µg/die for adult people (2001). Iodine is a mineral salt widespread in nature but it is present in very small quantity. In fact, environmental iodine deficiency is a serious public health problem, according to WHO evaluations, because it produces goitre, cretinism, immune insufficiency and learning difficulties.

It is estimated that 225 million of people in the world are suffering from iodine deficiency disorders (International Council for the Control of Iodine Deficiency Disorders); in Italy for examples about 6 million of people are exposed to environmental iodine deficiency risks, and the endemic goitre is present not only in the most distant zones from the sea, but throughout the national territory (Health Superior Institute, 1998). The average recommended daily requirement of iodine for men is 150 µg/die, and this level is greater for pregnant women and for children (LARN, Level of Assumption Recommended of energy and Nourishing for the Italian population, edition 1996).

An adequate nutritional intake of iodine is essential, and diet is the most important source of this element. Iodine is present especially in fish, while its contents varies in fruits and vegetables, according to the cultivation of land but it is often too low compared to human needs.

The average iodine contents in potatoes is about 2 µg per 100 grams of edible potatoes (Food Standard Agency, London, 2002). Results of laboratory analysis of potato samples cultivated in Italy show that their average iodine contents is less than 1 µg per 100 grams of fresh weight.

It is known that the use of salt fortified with iodine is still the most effective strategy to cope with iodide deficiency disorders, but in many countries, including Italy, the consumption of iodized salt is still not widespread. Another disadvantage of iodized salt is the fact that can not be used in sufficient quantities by certain categories of people such as the hypertensive.

### DISCLOSURE OF TRE INVENTION

An object of the present invention is to propose a method and a composition for enriching potatoes, with iodine and to propose iodine enriched potatoes in order to obtain Functional Foods that are essential for health and for nutritional wellness.

Another object is to propose a method and composition for enriching potatoes with iodine to provide potatoes with an increased level of iodine, even after cooking and after storage and with organoleptic properties unchanged. Another object is to propose a method and a composition to enhance potatoes with iodine, and through traditional agronomic practices, using the natural metabolic pathways of potatoes plant.

### BEST MODE OF CARRYING OUT THE INVENTION

The method for enriching potatoes with iodine refers to the spraying on potato plants a composition containing iodine, which is absorbed by potatoes plant, moved inside and effectively accumulated in the tuber, in a significantly higher quantity than the norm. The method provides a composition comprising a solution of iodine salt, with iodine contents ranging from 0,01 % to 50%, but preferably 34%.

The method provides that the solution of iodine salts includes at least one among iodide or iodate of potassium, of sodium, of calcium, of magnesium, of ammonium, of zinc, of copper, of barium, of caesium, dioxide iodide, iodine acid, iodidric acid, methyl iodide, but preferably potassium iodide. In particular, it is provided that said iodine salts are used together with phosphorus pentoxide and potassium oxide, respectively present in the composition for the 5% and the 12%.

Moreover, the method provides to use a composition containing iodine salts and optionally at least one of surfactants, chelating agents, wetting agents, penetrating agents, humic acids, fulvic acids, amino acids, and others in any composition and proportion. The method provides that the composition solution at 0,5% has a pH of 4.8. The method also provides that the composition at 20°C has a specific weight of 1,544 kg/lt.

The method provides that the composition is sprayed on epigean apparatus of potatoes plant preferably during the vegetative cycle of plants. And the spraying is preferably carried out in the form of small droplets, having a diameter smaller than a millimetre, after dilution of the composition in water, using distilled water, and/or double-distilled, and/or drinking water, and/or well water, and/or pulping water, and/or channel water, and/or river water, and more.

The method further provides to supply the composition in such a way as to distribute an amount of iodine per hectare up to 17 kg, in particular applied to crops of potatoes up to 50 kg per hectare of composition, for an accumulation of iodine in potatoes for a minimum of 25 µg iodine per 100 grams of potato, corresponding to 16,6% of the Recommended Daily Allowance (RDA), and 25 times the iodine level of traditional potatoes. The method also provides to use potatoes in order to achieve functional foods enriched with iodine and turn them industrially for functional products based on iodine enriched potato.

The composition, object of the present invention, for enriching iodine potatoes, contains iodine in the form of salts in solution. The solution of iodine salt has an iodine contents of between 0,01% and 50%, but preferably about 34%.

The composition includes at least one among iodide or iodate of potassium, of sodium, of calcium, of magnesium, of ammonium, of zinc, of copper, of barium, of caesium, dioxide iodide, iodine acid, iodidric acid, methyl iodide, but preferably potassium iodide. In particular, the invention provides that these iodine salts are used together with phosphorus pentoxide and potassium oxide, respectively present in the composition for the 5% and the 12%.

The composition contains iodine salts and optionally at least one among surfactants, chelating agents, wetting agents, penetrating agents, humic acids, fulvic acids, amino acids, and others in any combination and percentage.

The composition in the 0,5% solution has a pH of 4,8. The composition at 20°C has a specific weight of 1,544 kg/lt.

The potato object of this invention has an iodine contents that reaches values up to 70 times the contents of traditional potatoes, and maintains an iodine contents greater than traditional potatoes after cooking and after storage.

One advantage of this invention is to provide a method and a composition for enriching potatoes, or other plant food, with iodine and to provide potatoes, or other tubers and plant food, enriched with iodine.

Another advantage is to provide a method and a composition to enhance potatoes with iodine fit to produce potatoes with an increased level of iodine, even after cooking and after storage, with organoleptic properties unchanged. Another advantage is to provide a method for enriching potatoes with iodine, by means of traditional agronomic practices, which uses the natural metabolic pathways of potatoes plant.

## Claims

1. Method for enriching potatoes, with iodine **characterized in that** a composition containing iodine is applied, by means of spraying on the plants, said composition comprising a solution of iodine salt, with iodine contents ranging between 0,01% and 50%, said solution of iodine salts including at least one among iodide or iodate of potassium, of sodium, of calcium, of magnesium, of ammonium, of zinc, of copper, of barium, of caesium, dioxide iodide, iodine acid, iodidric acid, methyl iodide, said method being further **characterised by** using a composition with a solution of iodine salt together with phosphorus pentoxide and potassium oxide, and in that said composition is applied in an amount of iodine per hectare of from 17 kg up to the dose of 50 kg of iodine per hectare of potatoes, for obtaining an accumulation of iodine in potatoes for a minimum of 25 µg iodine per 100 grams of potato.

2. Method according to the previous claim **characterized by** using a composition with a solution of iodine salts, phosphorus pentoxide and potassium oxide, and at least one among surfactants, wetting agents, penetrating agents, chelating agents, humic acids, fulvic acids, amino acids and others.

3. Method according to any of the previous claims **characterized in that** the composition is sprayed on the epigean portion of potatoes plants.

4. Method according to claim 3 **characterized in that** the spraying is carried out in the form of small droplets having a diameter smaller than a millimetre.

5. Method according to claim 3 **characterized in that** the spraying is carried out after dilution of said composition in water.

6. Method according to claim 5 **characterized by** using a quantity of water up to 500kg (5 quintals) per hectare of potato plants.

7. Method according to claim 3 **characterized in that** the spraying is carried out during the vegetative cycle of the potato plants.

8. Composition for enriching with iodine potatoes **characterized in that** it includes a solution of iodine salts, having a iodine contents ranging between 0,01% and 50%, together with phosphorus pentoxide and potassium oxide.

9. Composition according to claim 8 **characterized in that** it further includes at least one among surfactants, chelating agents, wetting agents, penetrating agents, humic acids,fulvic acids, and other.

10. Composition according to claim 8 **characterized in that** it has a pH of 4.8 in 0,5% solution.

11. Potato obtained by the method of any of the claims 1 - 7, **characterized in that** it has a iodine contents of at least 25 µg of iodine per 100 g of potato.

## Patentansprüche

1. Verfahren zum Anreichern von Kartoffeln mit Jod, **dadurch gekennzeichnet, dass** eine jodhaltige Verbindung durch Besprühen der Pflanzen aufgebracht wird, wobei die Verbindung eine Lösung mit Jodsalz aufweist, wobei der Jodgehalt zwischen 0,01 % und 50% liegt, wobei die Lösung mit Jodsalzen zumindest eines von Jodid oder Jodat aus Kalium, Natrium, Kalzium, Magnesium, Ammonium, Zink, Kupfer, Barium, Caesium, Jodiddioxid, Jodsäure, jodidrischer Säure, Methyljodid enthält, wobei das Verfahren ferner **dadurch gekennzeichnet ist, dass** eine Verbindung mit einer Lösung mit Jodsalz zusammen mit Phosphorpentoxid und Kaliumoxid verwendet wird, und dadurch, dass diese Verbindung in einer Jodmenge pro Hektar zwischen mindestens 17 kg bis zu einer Dosis von 50 kg Jod pro Hektar an Kartoffeln aufgebracht wird, um eine Ansammlung von Jod in Kartoffeln von mindestens 25 µg pro 100 g Kartoffeln zu erhalten.

2. Verfahren nach dem vorgenannten Anspruch, **dadurch gekennzeichnet, dass** eine Verbindung mit einer Lösung mit Jodsalzen, Phosphorpentoxid und Kaliumoxid, und zumindest eines von Tensiden, Netzmitteln, Penetriermitteln, Chelatbildnern, Huminsäuren, Fulvinsäuren, Aminosäuren und anderen verwendet wird.

3. Verfahren nach einem der vorgenannten Ansprüche, **dadurch gekennzeichnet, dass** die Verbindung auf den epigeanen Teil der Kartoffelpflanzen gesprüht wird.

4. Verfahren nach Anspruch 3, **dadurch gekennzeichnet, dass** das Besprühen in Form von kleinen Tröpfchen mit einem Durchmesser, der kleiner als 1 Millimeter ist, durchgeführt wird.

5. Verfahren nach Anspruch 3, **dadurch gekennzeichnet, dass** das Besprühen nach dem Lösen der Verbindung in Wasser durchgeführt wird.

6. Verfahren nach Anspruch 5, **dadurch gekennzeichnet, dass** eine Wassermenge von bis zu 500 kg (5 Quintal) pro Hektar an Kartoffelpflanzen verwendet wird.

7. Verfahren nach Anspruch 3, **dadurch gekennzeichnet, dass** das Besprühen während des vegetativen Zyklus der Kartoffelpflanzen durchgeführt wird.

8. Verbindung zum Anreichern von Kartoffeln mit Jod, **dadurch gekennzeichnet, dass** sie eine Lösung mit Jodsalzen, die einen Jodgehalt zwischen 0,01% und 50% aufweisen, zusammen mit Phosphorpentoxid und Kaliumoxid enthält.

9. Verbindung nach Anspruch 8, **dadurch gekennzeichnet, dass** sie ferner zumindest eines von Tensiden, Netzmitteln, Penetriermitteln, Chelatbildnern, Huminsäuren, Fulvinsäuren, und anderen enthält.

10. Verbindung nach Anspruch 8, **dadurch gekennzeichnet, dass** sie einen pH-Wert von 4,8 in einer 0,5%-Lösung aufweist.

11. Kartoffel, erzeugt durch das Verfahren nach Anspruch 1 bis 7, **dadurch gekennzeichnet, dass** sie einen Jodgehalt von zumindest 25 µg pro 100g der Kartoffel enthält.

## Revendications

1. Procédé pour enrichir des pommes de terre en iode **caractérisé en ce qu'**une composition contenant de l'iode est appliquée, au moyen d'une pulvérisation sur les plants, ladite composition comprenant une solution de sel d'iode, avec une teneur en iode comprise entre 0,01 % et 50 %, ladite solution de sels d'iode incluant au moins l'un parmi l'iodure ou l'iodate de potassium, de sodium, de calcium, de magnésium, d'ammonium, de zinc, de cuivre, de baryum, de césium, l'iodure de dioxyde, l'acide d'iode, l'acide iodidrique, l'iodure de méthyle, ledit procédé étant **caractérisé par** l'utilisation d'une composition avec une solution de sel d'iodure en conjugaison avec du pentoxyde de phosphore et de l'oxyde de potassium, et en ce que ladite composition est appliquée dans une quantité d'iode par hectare allant de 17 kg jusqu'à la dose de 50 kg d'iode par hectare de pommes de terre, pour obtenir une accumulation d'iode dans les pommes de terre pour un minimum de 25 µg d'iode pour 100 grammes de pomme de terre.

2. Procédé selon la revendication précédente, **caractérisé par** l'utilisation d'une composition ayant une solution de sels d'iode, de pentoxyde de phosphore et d'oxyde de potassium, et d'au moins l'un parmi des tensioactifs, agents mouillants, agents pénétrants, agents chélateurs, acides humiques, acides fulviques, acides aminés et autres.

3. Procédé selon l'une quelconque des revendications précédentes, **caractérisé en ce que** la composition est pulvérisée sur la partie épigée des plants de pommes de terre.

4. Procédé selon la revendication 3, **caractérisé en ce que** la pulvérisation est effectuée sous la forme de petites gouttes ayant un diamètre inférieur à un millimètre.

5. Procédé selon la revendication 3, **caractérisé en ce que** la pulvérisation est effectuée après dilution de ladite composition dans de l'eau.

6. Procédé selon la revendication 5, **caractérisé par** l'utilisation d'une quantité d'eau allant jusqu'à 500 kg (5 quintaux) par hectare de plants de pommes de terre.

7. Procédé selon la revendication 3, **caractérisé en ce que** la pulvérisation est effectuée lors du cycle végétatif des plants de pommes de terre.

8. Composition pour enrichir en iode des pommes de terre, **caractérisée en ce qu'**elle inclut une solution de sels d'iode, ayant une teneur en iode comprise entre 0,01 % et 50 %, en conjugaison avec du pentoxyde de phosphore et de l'oxyde de potassium.

9. Composition selon la revendication 8, **caractérisée en ce qu'**elle comprend en outre au moins un parmi des tensioactifs, agents chélateurs, agents mouillants, agents pénétrants, acides humiques, acides fulviques et autres.

10. Composition selon la revendication 8, **caractérisée en ce qu'**elle a un pH de 4,8 dans une solution à 0,5 %.

11. Pomme de terre obtenue par le procédé selon l'une quelconque des revendications 1 à 7, **caractérisée en ce qu'**elle a une teneur en iode d'au moins 25 µg d'iode pour 100 g de pomme de terre.
